## Europäisches Patentamt
## European Patent Office
## Office européen des brevets

(19)

(11) Veröffentlichungsnummer: **0 028 010**
**A2**

(12) # EUROPÄISCHE PATENTANMELDUNG

(21) Anmeldenummer: **80106468.4**

(51) Int. Cl.³: **G 21 C 19/06**

(22) Anmeldetag: **23.10.80**

(30) Priorität: **27.10.79 DE 2943455**

(43) Veröffentlichungstag der Anmeldung: **06.05.81**
**Patentblatt 81/18**

(84) Benannte Vertragsstaaten: **BE CH FR GB IT LI SE**

(71) Anmelder: **Nukem GmbH, Rodenbacher Chaussee 6 Postfach 11 00 80, D-6450 Hanau 11 (DE)**

(72) Erfinder: **Knappe, Ortwin, Grünaustrasse 11, D-6450 Hanau 9 (DE)**
Erfinder: **Kroll, Hartmut, Dipl.-Phys., Gauss-Strasse 6, D-6450 Hanau 1 (DE)**

(54) **Verfahren und Vorrichtung zum Lagern von radioaktivem Abfall, insbesondere von bestrahlten Brennelementen.**

(57) Bei bekannten Lagerkonzepten befinden sich die abgebrannten Kernbrennelemente in Lagergestellen, die auf den eigentlichen Lagerböden der Nass- bzw. Trockenlager stehen. Diese Anordnung hat Nachteile bei Schockwellen- oder Erdebeneinwirkungen. Diese Nachteile werden vermieden, indem man die Lagergestelle hängend in den Nass- und Trockenlagern anordnet.

EP 0 028 010 A2

NUKEM GmbH
6450 Hanau 11

<u>Verfahren und Vorrichtung zum Lagern von radioaktivem Abfall,</u>
<u>insbesondere von bestrahlten Brennelementen.</u>

Gegenstand der vorliegenden Erfindung sind ein Verfahren und
eine Vorrichtung zum Lagern von radioaktivem Abfall, insbesondere von bestrahlten bzw. abgebrannten Brennelementen
in Naß- oder Trockenlagern.

Bestrahlte bzw. abgebrannte Brennelemente und hochradioaktiver Abfall müssen nach ihrem Einsatz im Kernreaktor bis
zu ihrer Wiederaufarbeitung bzw. zur Endlagerung zwischengelagert werden. Dieses erfolgt in Naß- oder Trockenlagern,
die entsprechend ausgelegt sind. Dabei werden die bestrahlten
Brennelemente im allgemeinen direkt oder in Behältern eingeschlossen in Lagergestelle eingebracht. Solche Lagergestelle
sind in großer Anzahl bekannt, z. B. in den DE-OSen 28 36 762,
27 53 468, DE-GM 76 24 867, 78 22 589. Den Lagergestellen,
überwiegend Metallkonstruktionen, fallweise auch als Betonkörper ausgebildet,die Lagerpositionen enthalten, ist gemeinsam, daß sie auf dem Lagerboden des Naß- oder Trockenlagers stehen. Aus dieser Tatsache ergeben sich bei einer
Schockwellen- bzw. Erdbebeneinwirkung auf das Lager und
dessen Inventar Nachteile, die verhängnisvoll sein können.
Da die Krafteinleitung bzw. Schwingungserregung durch die Störwellen am Fußpunkt der schweren Lagergestelle erfolgt, resultieren ernsthafte Standsicherheitsprobleme. Die Lagergestellbelastung des durch die Störwellen stark biegebeanspruchten Lagerbodens kann zusätzlich zu Rissen und damit zu Undichtigkeiten des Sicherheitscontainments mit allen seinen unbedingt zu vermeidenden Folgen führen. Auch bei der Umrüstung von Lagern auf kompaktere Lagergestellanordnung ergeben sich Probleme bei der Lagerbodenbeanspruchung.

Es war daher Aufgabe der vorliegenden Erfindung, ein Verfahren und eine Vorrichtung zu finden, die es gestatten, Lagergestelle zur Aufbewahrung von radioaktivem Abfall, insbesondere von bestrahlten Brennelementen, so in einem Naß- oder Trockenlager anzuordnen, daß Erdbeben- und Schockwellen bedingte Schäden vermieden und eine Entlastung des Lagerbodens generell erzielt werden.

Diese Aufgabe wurde erfindungsgemäß dadurch gelöst, daß die Lagergestelle hängend in den Naß- und Trockenlagern angeordnet werden. Zur Durchführung dieses Verfahrens dient vorteilhafterweise eine Vorrichtung, bei der die Lagergestelle über Aufhängeelemente an den Wänden der Lagerzellen befestigt sind.

Anhand der Abb. I und II werden das erfindungsgemäße Verfahren und zwei beispielhafte Vorrichtungen zur Durchführung dieses Verfahrens schematisch näher erläutert.

- 3 -

0028010

In einem - Abb. I - mit Wasser (1) gefüllten Naßlagerbecken (2) befindet sich ein bestrahlte Brennelement enthaltendes Lagergestell (3). Am Lagergestell (3) sind Befestigungsvorrichtungen (4), beispielsweise Ösen, angebracht, an denen Aufhängeelemente (5) befestigt sind, die das Lagergestell (3) hängend tragen. Die Aufhängeelemente (5) werden über an der Lagerzellenwand (2) befindliche Auflager (6) an Halte- und Antriebselementen (7) gespannt. Es ist vorteilhaft, unter dem Lagergestell (3) Dämpfungselemente (8) zur zusätzlichen Sicherung anzubringen. Günstig ist dabei, die Aufhängeelemente (5) über die Halte- und Antriebselemente (7) so zu spannen, daß die Dämpfungselemente (8) entlastet sind. Durch die Aufhängung der Lagergestelle (3) können die Erdbeben- oder Schockwellen nicht mehr über den Fußpunkt der Lagergestelle eingeleitet werden, so daß sich das Problem der Standsicherheit nicht mehr stellt, ebenso nicht die nachteilige Zusatzbelastung des Lagerbodens (13). Das Risiko des Entstehens von Rissen und Undichtigkeiten im Lagerboden (13) wird wegen des Fehlens der Lagergestell-Zusatzbelastung somit verringert.

In einem - Abb. II - Luftlagerbecken (9) befindet sich ein verglasten radioaktivem Abfall enthaltendes Lagergestell (10). Dieses Lagergestell (10) befindet sich auf einer Basisplatte (11), an der Befestigungsvorrichtungen (4) angebracht sind. An den Befestigungsvorrichtungen (4) sind wieder Aufhängeelemente (5) befestigt, die über Auflager (6) in den Halte- und Antriebselementen (7) gespannt werden. An der Unterseite der Basisplatte (11) sind vorteilhafterweise Dämpfungselemente (8) montiert. Die Aufhängeelemente (5) werden über die Halte- und Antriebselemente (7) so gespannt, daß die Dämpfungselemente (8) der Basisplatte (11) entlastet sind.

In gewissen Fällen ist es vorteilhaft, die Basisplatte (11) mit Löchern (12) zu versehen, die der Verbesserung der Bewegung des Kühlmediums dienen und also zur besseren Abfuhr der Nachzerfallswärme aus dem radioaktiven Lagergut beitragen. Im Falle des Einsatzes in Naßlagerbecken wird infolge der Löcher (12) in der Basisplatte (11) beim Heben und Senken die Wasserverdrängung günstig gestaltet.

Als Aufhängeelemente (5) sind beispielsweise Stangen, Stahlseile und Konsolen geeignet. Die Aufhängeelemente (5) können auch mittels Schraubenverbindungen am Auflager (6) befestigt sein. Je nach Art von Lager und Lagergestell können die Befestigungsvorrichtungen (4) an den Lagergestellen bzw. an der Basisplatte in verschiedenen Positionen von Umfang und Höhe verwendet werden. Als Material für die Basisplatte (11) ist Stahl besonders geeignet, jedoch können auch andere Metalle und fallweise bewehrter Beton verwendet werden.

Die Aufhängung kann auch indirekt an der Lagerzellenwand erfolgen, beispielsweise über Aufhängeelemente, die an der

0028010

Decke des Lagers angebracht sind.

Durch die erfindungsgemäße Aufhängung ergeben sich auch Vorteile bei der Wartung des Lagers.

PAT/Dr.Br-ka
6.10.1980

NUKEM GmbH
6450 Hanau 11

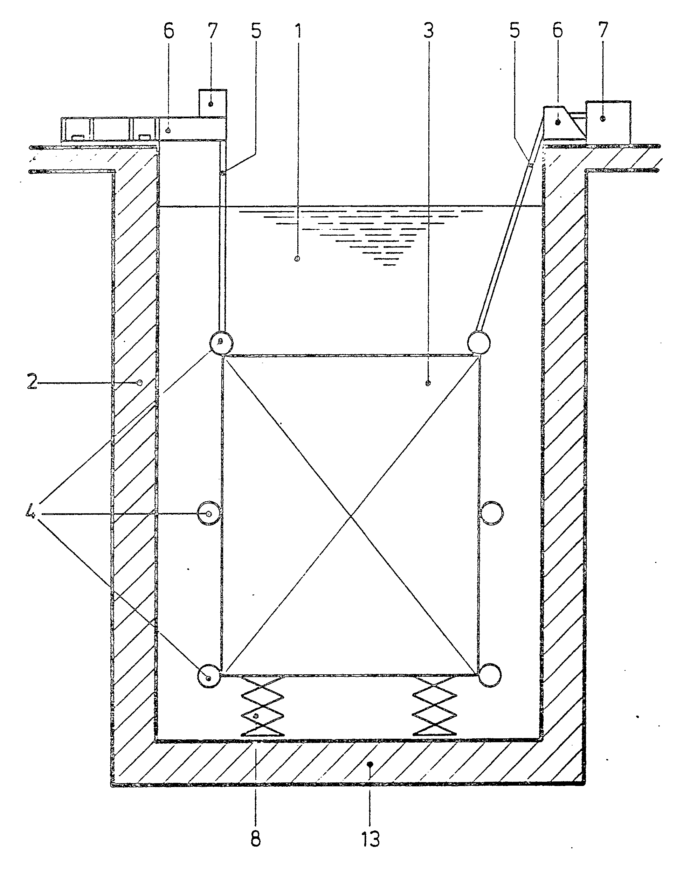

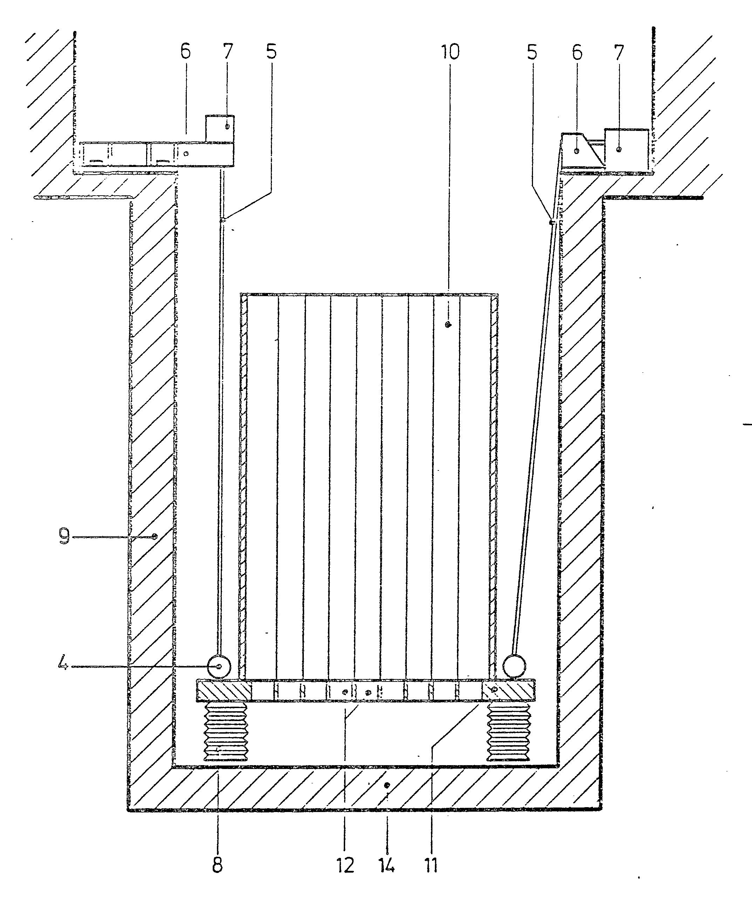

## Patentansprüche

Verfahren und Vorrichtung zum Lagern von radioaktivem
Abfall, insbesondere von bestrahlten Brennelementen

1. Verfahren zur Lagerung von radioaktivem Abfall, insbesondere von bestrahlten bzw. abgebrannten Brennelementen aus Kernreaktoren, in Naß- oder Trockenlagern mittels Lagergestellen, dadurch gekennzeichnet, daß die Lagergestelle hängend angeordnet werden.

2. Vorrichtung zur Durchführung des Verfahrens nach Anspruch 1, bestehend aus den radioaktiven Abfall enthaltenden Lagergestellen, dadurch gekennzeichnet, daß die Lagergestelle (3, 10) über Aufhängeelemente (5) an den Wänden (2, 9) der Lagerzellen befestigt sind.

3. Vorrichtung nach Anspruch 1 und 2, dadurch gekennzeichnet, daß die Lagergestelle (3, 10) auf einer nicht am Lagerboden (14) aufsitzenden Basisplatte (11) angeordnet sind, welche über Aufhängeelemente (5) an der Lagerzellenwandung (2, 9) befestigt ist.

4. Vorrichtung nach Anspruch 1 bis 3, dadurch gekennzeichnet, daß die Basisplatte (1) mit Dämpfungselementen (8) versehen ist.

- 2 -

5. Vorrichtung nach Anspruch 1 bis 4, <u>dadurch gekennzeichnet</u>, daß die Basisplatte (11) mit Löchern (12) versehen ist.

Abb.I

Abb. II